# EUROPEAN PATENT APPLICATION

(11) **EP 4 686 027 A1**
(43) Date of publication of application: **28.01.2026**
(21) Application number: 24190118.0
(22) Date of filing: 22.07.2024
(51) Int. Cl.: H02J 1/08, H02J 7/00

(54) **AN ELECTRICAL POWER DISTRIBUTION SYSTEM**

(71) Applicant: Thermo King LLC, Minneapolis, MN 55420 (US)
(72) Inventor: GORSKI, Matthias, 44866 Bochum (DE); BOCK, Sebastian, 45239 Essen (DE); MULLER, Marcel, 46147 Oberhausen (DE)
(74) Representative: Haseltine Lake Kempner LLP

(57) **Abstract**

An electrical power distribution system (400) configured to supply electrical power from a battery pack (420) to a DC link (130), wherein the battery pack (420) comprises a plurality of modules (422a - 422n), each module (422a - 422n) comprising a set of cells, the electrical power distribution system (400) comprising: a plurality of DC-DC converters (410a - 410n), wherein outputs of the plurality of DC-DC converters (410a - 410n) are coupled in series between a first output node (412)_and a second output node (414) of the electrical power distribution system (400), such that an output voltage of the electrical power distribution system (400) is equal to a sum of output voltages of the DC-DC converters (410a - 410n), and wherein, in use of the electrical power distribution system (400): each of the plurality of DC-DC converters (410a - 410n) is coupled to a respective one of the plurality of modules (422a - 422n) to receive a DC input voltage of a first magnitude from the respective one of the plurality of modules (422a - 422n); and each of the plurality of DC-DC converters (410a - 410n) is operative to generate, based on the received DC input voltage, an output voltage of a second magnitude; and the first output node (412) is coupled to a first input terminal of the DC link (130) and the second output node (414) is coupled to a second input terminal of the DC link (130).

## Description

### Field of the Invention

The present disclosure relates to an electrical power distribution system, in particular an electrical power distribution system configured to supply electrical power from a battery pack to a DC link of a transport refrigeration unit.

### Background

A transport refrigeration unit (TRU) is generally used to control a temperature and possibly other environmental conditions such as humidity and/or air quality of a transport unit. Examples of transport units include, but are not limited to a truck, a container (such as a container on a flat car, an intermodal container, a marine container, a rail container, etc.), a box car, a semi-tractor, a bus, or other similar transport unit. A TRU may be integrated into the transport unit, or may be provided as a separate TRU that can be mounted or coupled to the transport unit.

A TRU typically includes (among other elements) temperature control components such as pumps, fans, heat exchangers and the like, together with associated electrical elements such as sensors (e.g. temperature sensors), a controller, a display, electrical drives, electrical filters and the like. The temperature control components and associated elements are typically electrically powered. The TRU may thus include one or more batteries or battery packs for supplying DC electrical power to the temperature control components and associated electrical elements.

Alternatively, the TRU may be configured to receive DC electrical power for powering the temperature control components and associated elements from an external power source such as a battery or battery pack of a transport unit or vehicle to which the TRU is mounted or coupled.

An electrically powered TRU typically includes a DC link to which the electrically powered temperature control components and the associated electrical elements are coupled, either directly or via suitable power converters, e.g. DC-DC or DC-AC converters. The DC link may be configured to operate at a relatively high voltage, e.g. of the order of 700 - 800V DC. In contrast, the nominal or rated output voltage of a battery or battery pack may be of the order of 400V DC. It is thus necessary to convert the DC voltage output by the battery or battery pack to a higher DC voltage suitable for the DC link of the TRU.

### Summary

According to a first aspect, the invention provides an electrical power distribution system configured to supply electrical power from a battery pack to a DC link, wherein the battery pack comprises a plurality of modules, each module comprising a set of cells, the electrical power distribution system comprising: a plurality of DC-DC converters, wherein outputs of the plurality of DC-DC converters are coupled in series between a first output node and a second output node of the electrical power distribution system, such that an output voltage of the electrical power distribution system is equal to a sum of output voltages of the DC-DC converters, and wherein, in use of the electrical power distribution system: each of the plurality of DC-DC converters is coupled to a respective one of the plurality of modules to receive a DC input voltage of a first magnitude from the respective one of the plurality of modules; and each of the plurality of DC-DC converters is operative to generate, based on the received DC input voltage, an output voltage of a second magnitude; and the first output node is coupled to a first input terminal of the DC link and the second output node is coupled to a second input terminal of the DC link.

The electrical power distribution system may further comprise: a plurality of module management units, MMUs, wherein, in use of the electrical power distribution system, each of the plurality of MMUs is coupled to a respective one of the plurality of modules, and wherein each of the plurality of MMUs is configured to monitor an electrical parameter of the respective one of the plurality of modules.

The electrical parameter may comprise one or more of: a state of charge of a cell of the respective one of the plurality of modules; an internal resistance of a cell of the respective one of the plurality of modules; a temperature of a cell of the respective one of the plurality of modules; a current of a cell of the respective one of the plurality of modules; a voltage of a cell of the respective one of the plurality of modules; and a state of health of a cell of the respective one of the plurality of modules.

Each of the plurality of MMUs may be further configured to perform cell balancing on cells of the respective one of the plurality of modules.

Each of the plurality of MMUs may be integrated with a respective one of the plurality of DC-DC converters.

The electrical power distribution system may further comprise: a battery management system, BMS, configured to control each of the plurality of DC-DC converters individually, so as to achieve a predefined output voltage and/or output current at the DC link.

According to a second aspect, the invention provides a transport refrigeration unit, TRU, comprising an electrical power distribution system according to the first aspect.

According to a third aspect, the invention provides a transport unit comprising an electrical power distribution system according to the first aspect.

According to a third aspect, the invention provides a vehicle comprising an electrical power distribution stem according to the first aspect.

According to a fourth aspect, the invention provides a battery pack for supplying DC electrical power, the battery pack comprising: a plurality of modules, each module comprising a set of cells, wherein each of the plurality of modules is provided with a DC-DC converter configured to convert a DC voltage of a first magnitude output by the module to a DC output voltage of a second magnitude, and wherein outputs of the plurality of DC-DC converters are coupled in series, such that a total DC output voltage of the DC-DC converters is equal to the sum of the output voltages of the DC-DC converters.

According to a fifth aspect, the invention provides a combined DC-DC converter and module management system unit comprising: a DC-DC converter configured to be coupled to a module of a battery pack; and a module management system, MMS, configured to: monitor one or more electrical parameters of cells of a module of a battery pack to which the combined DC-DC converter and module management system unit is coupled, in use; and perform cell balancing on the cells of the module.

Throughout this specification the word "comprise", or variations such as "comprises" or "comprising", will be understood to imply the inclusion of a stated element, integer or step, or group of elements, integers or steps, but not the exclusion of any other element, integer or step, or group of elements, integers or steps.

### Brief Description of Drawings

Embodiments of the invention will now be described, strictly by way of example only, with reference to the accompanying drawings, of which:
Figure 1 is a schematic representation of an arrangement for supplying electrical power from a battery pack to a DC link of a transport refrigeration unit;
Figure 2 is a more detailed schematic representation of an arrangement for supplying electrical power from a battery pack to a DC link;
Figure 3 is a schematic representation of a module of the battery pack of Figure 2;
Figure 4 is a is a schematic representation of an electrical power distribution system for supplying electrical power from a battery pack in accordance with the present disclosure;
Figure 5 is a more detailed schematic representation of the electrical power distribution system of Figure 4; and
Figure 6 is a schematic diagram showing couplings between a module of a battery pack and a module management system in use of the electrical power distribution system of Figure 4.

### Detailed Description

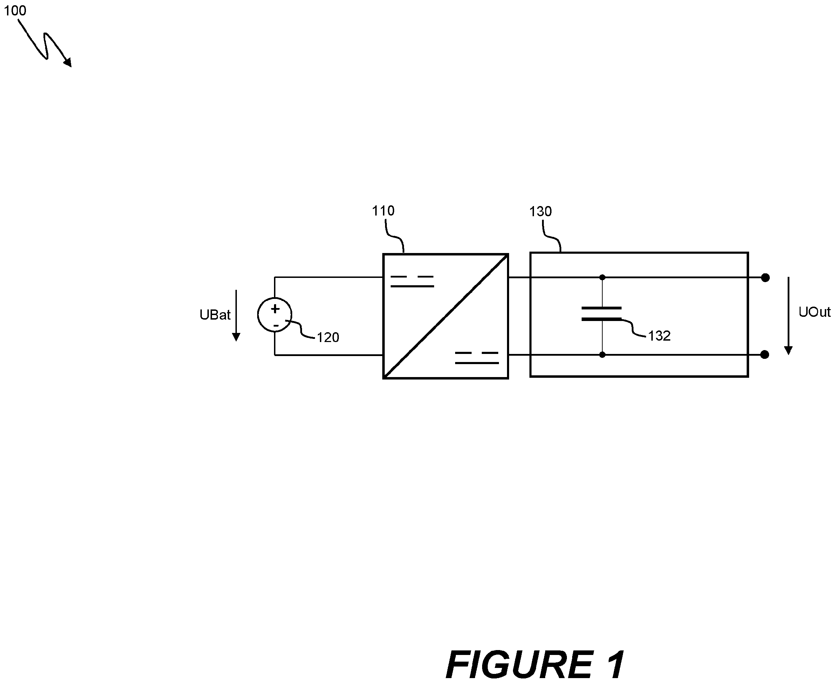

**Figure 1** is a simplified schematic representation of an arrangement for supplying electrical power from a battery pack to a DC link, e.g. of a transport refrigeration unit (TRU).

In the arrangement shown generally at 100 in Figure 1, an input of a DC-DC converter 110 receives a DC input voltage UBat of a first magnitude (e.g. 400V) from a battery pack (represented in Figure 1 as a voltage source 120). The DC-DC converter 110 is operative to convert the DC input voltage UBat to a DC output voltage UOut of a second magnitude (e.g. 700V or 800V). The DC output voltage UOut is output by the DC-DC converter 110 to the DC link 130, which includes a DC link capacitor 132. The DC-DC converter may also be operable to convert a DC input voltage received from the DC link 130 to a DC output voltage to be supplied to the battery pack 120 to charge the battery pack 120. Thus, the DC-DC converter may be operable as a bidirectional buck/boost converter.

The DC-DC converter 110 may be implemented as a half-bridge DC-DC converter of a kind that will be familiar to those skilled in the art. Such DC-DC converters can operate with high efficiency, but because of the high output voltage required, they are typically implemented using expensive silicon carbide (SiC) semiconductor switches (e.g. MOSFETs).

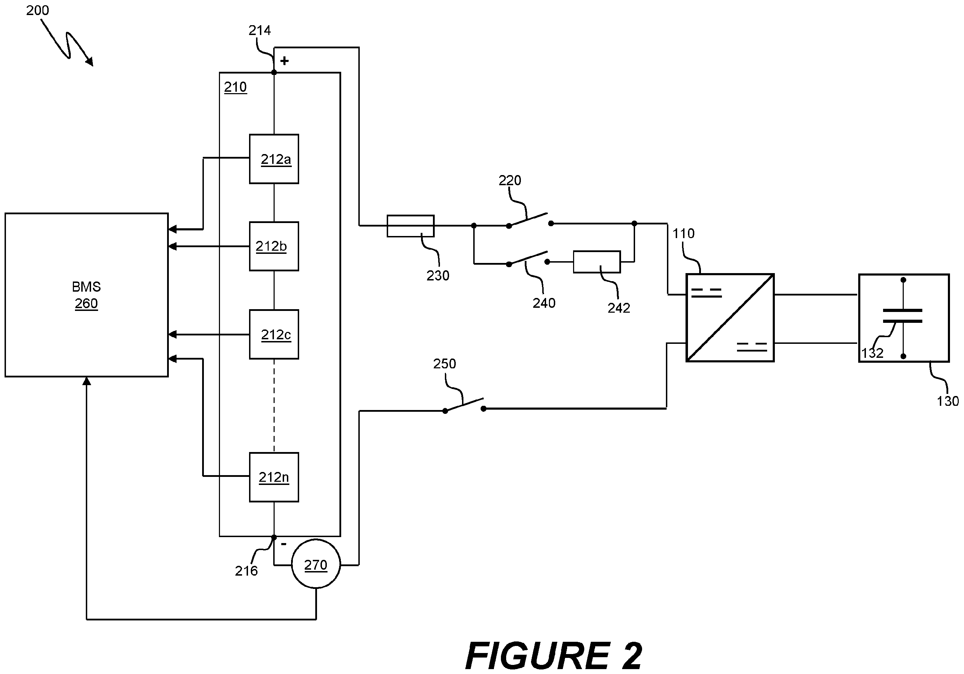

Additionally, in arrangements of the kind shown in Figure 1 additional components are required to limit current to the DC link 130 while the DC link capacitor 132 is pre-charging, as will now be explained with reference to **Figure 2****,** which is a more detailed schematic representation of an arrangement for supplying electrical power from a battery pack to a DC link.

As shown generally at 200 in Figure 2, a battery pack 210 comprises a plurality of modules 212a - 212n, which in this example are coupled in series between a positive (+) terminal 214 and a negative (-) terminal 216 of the battery pack 210. Each of the modules comprises a set of one or more cells, as described in more detail below. The positive and negative terminals 214, 216 of the battery pack 210 are coupled to respective first and second input terminals of the DC-DC converter 110.

A first contactor 220 and a fuse 230 are coupled in series between the positive terminal 214 of the battery pack 210 and a first input terminal of the DC-DC converter 110. A series combination of a pre-charge switch 240 and a pre-charge resistor 242 are coupled in parallel with the first contactor 220. A second contactor 250 is coupled in series between the negative terminal 216 of the battery pack 210 and a second input terminal of the DC-DC converter 110. First and second output terminals of the DC-DC converter 110 are coupled, respectively, to first and second input terminals of the DC link 130. Because of the high voltage output by the DC-DC converter 110, the first and second contactors 220, 250 must be large, which contributes to the size, weight and cost of the arrangement of Figure 2a.

The first contactor 220 and the second contactor 250 can be closed to couple the battery pack 210 to the inputs of the DC-DC converter 110. The fuse 230 protects the battery pack 210 from overcurrent conditions that may arise when the first and second contactors 220, 250 are closed.

To limit current to the DC link 130 during pre-charging of the DC link capacitor 132, the pre-charge switch 240 may be closed instead of the first contactor 220 during such pre-charging. With the pre-charge switch 240 and the second contactor 250 closed, input current to DC-DC converter 110 is limited by the pre-charge resistor 242. When the DC link capacitor 132 has charged to a desired level, the first contactor 220 may be closed and the pre-charge switch 240 may be opened, thus coupling the positive terminal 214 of the battery pack 210 to the first input of the DC-DC converter 110 via the first contactor 220 rather than via the pre-charge switch 240 and pre-charge resistor 242.

The arrangement of Figure 2 also includes a battery management system (BMS) 260, having a plurality of voltage inputs, each of which is coupled to a respective one of the modules 212a - 212n by a suitable wire or cable of a voltage monitor wiring harness. The BMS 260 is thus able to receive voltage measurement signals indicative of the voltage of each module 212a - 212n and/or the voltage of each individual cell of each module 212a - 212n. The length of the voltage monitor wiring harness is dependent upon the distance between the BMS and the modules 212a - 212n. Thus, where the BMS located far from the modules 212a - 212n, the voltage monitor wiring harness may be long.

The BMS 260 also has a current input configured to receive a current measurement signal from a current monitor 270 which (in this example) is coupled between the negative terminal 216 of the battery pack 210 and the second input terminal of the DC-DC converter 110.

The BMS 260 may also receive temperature measurement signals from temperature sensors associated with each of the modules 212a - 212n, via suitable cables or wires of a temperature sensor wiring harness. The length of the temperature sensor wiring harness is dependent on the distance between the modules 212a - 212n and the BMS 260, such that the temperature sensor wiring harness may be long if the BMS is located far from the modules 212a - 212n.

The BMS 260 is configured to perform battery management operations such as cell balancing, based on the voltage and/or current and/or temperature measurement signals received from the modules 212a - 212n and, where necessary, their associated temperature sensors. Cell balancing operations are performed using the cables or wires of the wiring harness that couples the modules 212a - 212n to the voltage inputs of the BMS 260.

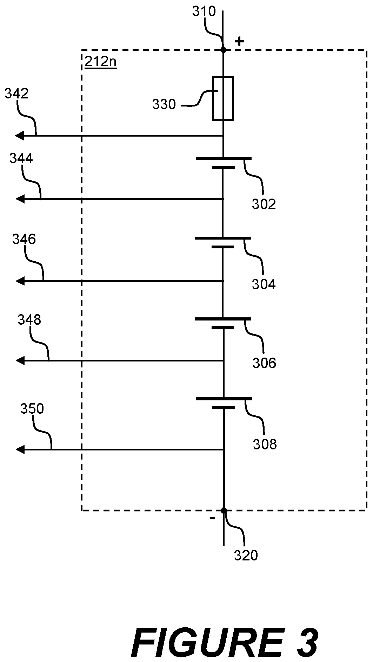

**Figure 3** is a schematic representation of a module of the battery pack 210 of Figure 2.

As shown in Figure 3, a module (e.g. module 212n) includes a plurality of cells. In the example shown in Figure 3, first to fourth cells 302 - 308 are coupled in series between a positive terminal 310 of the module 212n and a negative terminal 320 of the module 212n, but it will be appreciated by those skilled in the art that there may be more or fewer than four cells in the module 212n, and that other cell configurations are possible within the module 212n, e.g. parallel, series/parallel or parallel/series couplings of cells.

The module 212n further includes a fuse 330 coupled between the positive terminal 310 and the plurality of cells 302 - 308. Voltage monitor signal paths 342 - 350 (which may be, for example, wires, printed circuit traces or the like) are coupled to each of the plurality of cells 302 - 308 to permit monitoring of the voltage of each individual cell 302 - 308 by the BMS 260. For example, first and second voltage monitor signal paths 342, 344 are coupled to first and second terminals of the cell 302 to permit monitoring of the voltage of the first cell 302. The second voltage monitor signal path 344 is also coupled to a first terminal of the second cell 304, and a third voltage monitor signal path 346 is coupled to a second terminal of the second cell 304. The second and third voltage monitor signal paths 344, 346 thus permit monitoring of the voltage of the second cell 304. Similarly, the third voltage monitor signal path 346 and a fourth voltage monitor signal path 348 permit monitoring of the voltage of the third cell 306, and the fourth voltage monitor signal path 348 and a fifth voltage monitor signal path 350 permit monitoring of the voltage of the fourth cell 308.

As noted above, the arrangement described above with reference to Figures 1, 2a and 2b require large contactors and additional current limiting circuitry to limit current to the DC link 130 during pre-charging. Additionally, in the arrangement described above with reference to Figures 1, 2a and 2b, the total current output by the battery pack is limited by the weakest module or the weakest cell. Further, the internal resistance of each module must be approximately equal for efficient operation of the battery pack 210.

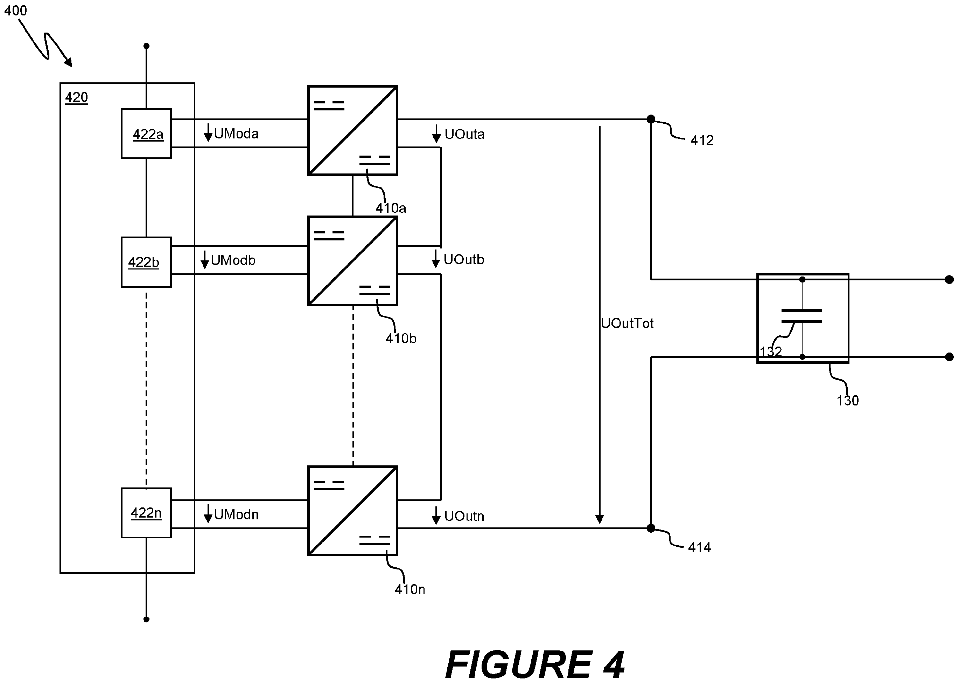

**Figure 4** is a simplified schematic representation of an electrical power distribution system for supplying electrical power from a battery pack in accordance with the present disclosure.

The electrical power distribution system, shown generally at 400 in Figure 4, comprises a plurality of DC-DC converters 410a - 410n. In use of the electrical power distribution system 400, each of the plurality of DC-DC converters 410a - 410n is coupled to a respective one of a plurality of modules 422a - 422n of a battery pack 420, such that each of the plurality of DC-DC converters 410a - 410n receives, at its input, a DC input voltage from the module 422a - 422n to which it is coupled.

In some examples, the plurality of DC-DC converters 410a - 410n may be integral with the battery pack 420, i.e. the battery pack 420 may comprise the plurality of DC-DC converters 410a - 410n. For example, each DC-DC converter 410a - 410n may be integrated with or connected to a respective one of the plurality of modules 422a - 422n. In other examples, the plurality of DC-DC converters 410a - 410n may be separate from the battery pack 420, with each of the plurality of DC-DC converters 410a - 410n being coupled to a respective one of the modules 422a - 422n in use of the electrical power distribution system 400.

Each of the plurality of DC-DC converters 410a - 410n is operative to convert the input voltage it receives from the module 422a - 422n to which it is connected to an output voltage of a different magnitude.

For example a first DC-DC converter 410a of the plurality of DC-DC converters receives a DC input voltage of a first magnitude UModa from a first module 422a of the battery and generates an output voltage of a second (typically higher) magnitude UOuta, based on the received input voltage. An nth DC-DC converter 410n receives a DC input voltage of a first magnitude UModn from an nth module 422n of the battery pack 420 and generates an output voltage of a second (typically higher) magnitude UOoutn, based on the received input voltage.

Outputs of the plurality of DC-DC converters 410a - 410n are coupled in series between a first output node 412 and a second output node 414 of the electrical power distribution system 400. Thus, an output voltage UOutTot of the electrical power distribution system 400 is equal to a sum of the output voltages UOut1 - UOutn of plurality of DC-DC converters 410a - 410n, i.e. UOutTot = UOut1 + UOut2 + ... + UOutn.

In use of the electrical power distribution system 400, the first output node 412 is coupled to a first input of a DC link 130 (e.g. a DC link of a TRU) and the second output node 414 is coupled to a second input of the DC link 130 so as to supply the output voltage UOutTot of the electrical power distribution system 400 to the DC link 130.

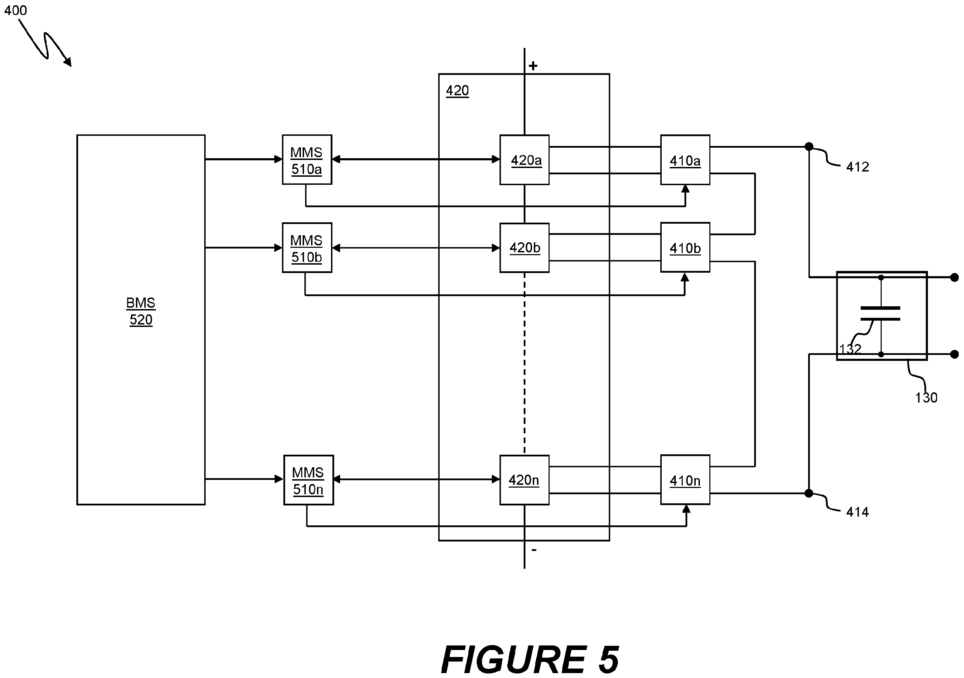

**Figure 5** is a more detailed schematic representation of the electrical power distribution system 400 of Figure 4.

In the example shown in Figure 5, the electrical power distribution system 400 includes a plurality of module management systems (MMS) 510a - 510n and a battery management system (BMS) 520.

Each of the plurality of MMS 510a - 510n comprises processing circuitry configured to monitor one or more electrical parameters of the cells of a module 422a-422n of the battery pack 420. The processing circuitry may comprise, for example, a microprocessor, microcontroller, application specific integrated circuit (ASIC), system on a chip (SoC) or other processing system executing suitable instructions to monitor the one or more electrical parameters, or may comprise discrete circuitry configured to receive one or more input signals and generate one or more output signals indicative of the monitored electrical parameter(s). The electrical parameter(s) may comprise, for example, one or more of a state of charge (SoC), internal resistance, temperature, current, voltage and state of health (SoH) of one or more of the cells of the module.

The BMS 520 comprises controller circuitry configured to each of the DC-DC converters 410a - 410n individually, such that the output voltage and/or output current of each of the DC-DC converters 410a - 410n can be individually controlled in order to achieve a desired or predefined output voltage and/or current at the DC link 130. The controller circuitry may comprise, for example, a microcontroller, microprocessor, application specific integrated circuit (ASIC), system on a chip (SoC) or other processing system executing suitable instructions to control each of the DC-DC converters 410a-410n individually, or may comprise discrete circuitry configured to control each of the DC-DC converters 410a - 410n individually.

In use of the electrical power distribution system 400, each of the plurality of MMUs 510a - 510n is coupled to a respective one of the plurality of modules 422a-422n of the battery pack 420. For example, a first MMS 510a is coupled, in use of the electrical power distribution system 400, to a first module 422a of the battery pack 420, while an nth MMS 510n is coupled, in use of the electrical power distribution system 400, to an nth module 422n of the battery pack 420. In the example shown in Figure 5 each MMS 510a - 510n is separate from the DC-DC converter 410a - 410n associated with the module 422a - 422n to which it is coupled, but in other examples each MMS 510a - 510n may be integrated with a respective one of the DC-DC converters 410a-410n to form a combined DC-DC converter and MMS unit or package.

Each MMS 510a - 510n is operative to monitor one or more electrical parameters of one or more of the cells of the module 422a - 422n to which it is coupled, such as the SoC, internal resistance, temperature, current, voltage and state of health (SoH) of the cell(s). Each MMS 510a - 510n may also be configured to perform cell balancing on the cells of the module 422a - 422n to which it is coupled, to balance the voltage and/or SoC of the cells of the module 422a - 422n. The cell balancing performed by the MMS 510a - 510n may be based on one or more of the monitored electrical parameters, e.g. the SoC, and/or internal resistance and/or voltage of one or more of the cells of the module 422a - 422n.

Each DC-DC converter 410a - 410n (whether implemented separately from the MMS 510a - 510n or integrated with a respective MMS 510a - 510n) is coupled to the BMS 520, which is configured to control each of the DC-DC converters 410a - 410n individually in order to achieve a desired output voltage and/or current at the DC link 130.

Each of the plurality of MMS 510a - 510n may, in use of the electrical power distribution system 400, be positioned physically close to the module 422a - 422n to which it is coupled. In some examples (particularly where an MMS and a DC-DC converter are integrated into a single unit or package) the MMS or combined DC-DC converter and MMS unit may be mounted on or otherwise integrated with the battery pack 420. By positioning the plurality of MMS 510a - 510n physically close to the modules 422a - 422n to which they are coupled, the length of a wiring harness used to couple the plurality of MMS 510a - 510n to the plurality of modules 422a - 422n to permit monitoring of the parameters of the cells of each module 422a - 422n can be reduced, in comparison to the length of the voltage monitor wiring harness used in the arrangement described above with reference to Figures 1, 2a and 2b. Reducing the length of the wiring harness may result in improved measurement accuracy and thus more efficient cell balancing.

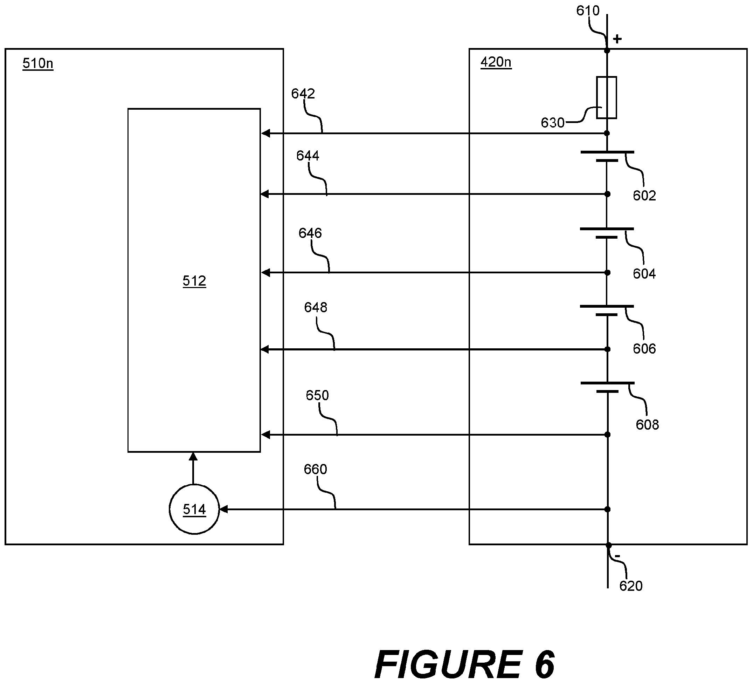

**Figure 6** is a schematic diagram showing couplings between a module 422n of the battery pack 400 and a MMS 510n in use of the electrical power distribution system 400 of Figure 4.

As shown in Figure 6, a module (e.g. module 422n) includes a plurality of cells. In the example shown in Figure 6, first to fourth cells 602 - 608 are coupled in series between a positive terminal 610 of the module 422n and a negative terminal 620 of the module 422n, but it will be appreciated by those skilled in the art that the module 422n may include more or fewer than four cells, and that other cell configurations are possible within the module 422n, e.g. parallel, series/parallel or parallel/series couplings of cells.

The module 422n further includes a fuse 630 coupled between the positive terminal 610 and the plurality of cells 602 - 608. Voltage monitor signal paths 642 - 650 (which may be, for example, wires, printed circuit traces or the like) are coupled to each of the plurality of cells 602 - 608, and output voltage signals to processing circuitry 512 of the MMS510n to which the module 422n is coupled, in use of the electrical power distribution system 400, to permit monitoring of the voltage of each individual cell 602-608 by the MMS 510n.

For example, first and second voltage monitor signal paths 642, 644 are coupled to first and second terminals of the cell 602 to permit monitoring of the voltage of the first cell 602. The second voltage monitor signal path 644 is also coupled to a first terminal of the second cell 604, and a third voltage monitor signal path 646 is coupled to a second terminal of the second cell 604. The second and third voltage monitor signal paths 644, 646 thus permit monitoring of the voltage of the second cell 604. Similarly, the third voltage monitor signal path 646 and a fourth voltage monitor signal path 648 permit monitoring of the voltage of the third cell 606, and the fourth voltage monitor signal path 648 and a fifth voltage monitor signal path 650 permit monitoring of the voltage of the fourth cell 608.

A current monitor signal path 660 is coupled, in the example of Figure 6, between the negative terminal 620 of the module 422n and current monitor circuitry 514 of the MMS 510n. The current monitor circuitry 514 may be configured, for example, to output a voltage indicative of the current through the module 420n to the processing circuitry 512 of the MMS 510n, to permit the current through the module 422n to be monitored by the MMS 510n.

The electrical power distribution system 400 of Figure 4 provides numerous benefits over the arrangement described above with reference to Figures 1 - 3.

As will be appreciated by those skilled in the art, the output voltages of the individual modules 422a - 422n of the battery pack 420 of Figure 4 are significantly smaller than the output voltage of the battery pack 420. For example, if the battery pack 420 has 16 modules coupled in series and a nominal or rated output voltage of 400V DC, the nominal or rated output voltage of each module is 25V DC. In the case where the output voltage UOutTot required by the DC link 130 is 800V DC, each DC-DC converter 410a - 410n would be required to supply an output voltage of 50V DC. Such voltages can be supported by conventional silicon based semiconductor switches. The DC-DC converters 410a - 410n thus need not use costly silicon carbide based semiconductor switches but can instead use silicon based semiconductor switches. Thus, the electrical power distribution system 400 may facilitate reduced costs as compared to the arrangement described above with reference to Figures 1 and 2.

Additionally, the electrical power distribution system 400 does not require a pre-charge resistor (or other pre-charge arrangement) for pre-charging the DC link capacitor 132. The output voltage UOutTot of the electrical power distribution system 400 can be varied by selectively operating the DC-DC converters 410a - 410n, for example to increase the output voltage UOutTot of the electrical power distribution system 400 in a series of steps, in order to progressively increase the DC link voltage to pre-charge the DC link capacitor 132 before operating all the DC-DC converters 410a - 410n to supply the maximum output voltage UOutTot to the DC link 130. The omission of a pre-charge resistor or other pre-charge arrangement may further reduce the cost of the electrical power distribution system as compared to the arrangement described above with reference to Figures 1 and 2.

Further, because the output voltage UOutTot is supplied by the DC-DC converters 410a - 410n, which can be controlled individually (e.g. by the BMS 520), rather than directly by the battery pack 420, the electrical power distribution system 400 is able to provide a controlled output voltage UOutTot and/or output current independently of the voltage of the battery pack 420, by appropriate control of the DC-DC converters 410a - 410d. This allows the electrical power distribution system 400 to limit output current to the DC link 130, thus allowing the use of a smaller fuse or even the omission of a fuse in the DC power supply line to the DC link 130.

Additionally, because the output current of the electrical power distribution system 400 can be controlled by the DC-DC converters 410a - 410n, the output current is not limited by the weakest cell or module 422a - 422n of the battery pack 420. The output current of each individual module 422a - 422n of the battery pack 420 can be selected or controlled, based on or taking into account parameters such as the state of charge (SoC), state of health (SoH) and temperature of each module 422a - 422n.

Still further, the electrical power distribution system 400 permits increased flexibility in repairing the battery pack 420, as the modules 422a - 422n can be replaced easily. Any module that fits mechanically into the battery pack 420 can replace a module 422a - 422n, even if its electrical characteristics (e.g. SoC, SoH, capacity, rated or nominal voltage, internal resistance) are different than those of the other modules in the battery pack 420, because each individual module 422a - 422n supplies its own output voltage UModa - UModn to a respective one of the plurality of DC-DC converters 410a - 410n. Thus, the battery pack 420 can be managed on an individual module level, such that individual modules 422a - 422n can be replaced when their performance has degraded (e.g. due to ageing) beyond acceptable limits, instead of having to replace the entire battery pack 420 when only a small number of modules has degraded. Further, the electrical power distribution system permits monitoring and management of ageing of the battery pack 420 on an individual model level, rather than only at the level of the whole battery pack 420. Thus, the battery pack 420 can be arranged such that all the modules 422a - 422n have substantially the same age (e.g. by replacing an individual module 422a - 422n that has aged at a different rate than the other modules 422a-422n of the battery pack).

Additionally, the electrical power distribution system 400 facilitates upgrading of the battery pack 420. For example, a module 422a - 422n may be replaced with a replacement module of a higher capacity to increase the total capacity of the battery pack 420.

Each of the plurality of DC-DC converters 410a - 410n may be coupled to the respective one of the plurality of modules 422a - 422n of the battery pack 420 after manufacture of the battery pack 420, e.g. during installation of the electrical power distribution system 400 in host system such as a transport vehicle or TRU.

It is also anticipated that the plurality of DC-DC converters 410a - 410n (with our without integrated MMS 510a - 510n) could be installed on the battery pack 420 and coupled to the respective modules 422a - 422n during manufacture of the battery pack 420, such that a battery pack 420can be supplied to an end user (e.g. a manufacturer of transport vehicles or TRUs) with each of the plurality of DC-DC converters 410a - 410n coupled to the respective one of the plurality of modules 422a - 422n of the battery pack 420.

Thus, the present disclosure extends to a battery pack comprising a plurality of modules, each module comprising a set of cells, in which each module is provided with a DC-DC converter configured to convert a DC voltage of a first magnitude output by the module to a DC output voltage of a second (typically higher) magnitude, and outputs of the DC-DC converters are coupled together in series between a first output node and a second output node, such that a DC output voltage of the battery pack is equal to the sum of the output voltages of the DC-DC converters. In such a battery pack, an output of each of the plurality of modules is coupled to an input of a respective one of a plurality of DC-DC converters, such that each DC-DC converter is operative to convert an output voltage of a respective one of the plurality of modules to a different (typically higher) DC-DC converter output voltage.

The present disclosure further extends to a TRU comprising an electrical power distribution system of the kind described herein, and to a vehicle (e.g. a truck, trailer, semi-truck van or the like) comprising an electrical power distribution system of the kind described herein.

Although exemplary embodiments are illustrated in the figures and described below, the principles of the present disclosure may be implemented using any number of techniques, whether currently known or not. The present disclosure should in no way be limited to the exemplary implementations and techniques illustrated in the drawings and described above.

Unless otherwise specifically noted, articles depicted in the drawings are not necessarily drawn to scale.

All examples and conditional language recited herein are intended for pedagogical objects to aid the reader in understanding the disclosure and the concepts contributed by the inventor to furthering the art, and are construed as being without limitation to such specifically recited examples and conditions. Although embodiments of the present disclosure have been described in detail, it should be understood that various changes, substitutions, and alterations could be made hereto without departing from the spirit and scope of the disclosure.

Although specific advantages have been enumerated above, various embodiments may include some, none, or all of the enumerated advantages. Additionally, other technical advantages may become readily apparent to one of ordinary skill in the art after review of the foregoing figures and description.

It should be noted that the above-mentioned embodiments illustrate rather than limit the invention, and that those skilled in the art will be able to design many alternative embodiments without departing from the scope of the appended claims. The word "comprising" does not exclude the presence of elements or steps other than those listed in a claim, "a" or "an" does not exclude a plurality, and a single feature or other unit may fulfil the functions of several units recited in the claims. Any reference numerals or labels in the claims shall not be construed so as to limit their scope.

## Claims

1. An electrical power distribution system configured to supply electrical power from a battery pack to a DC link, wherein the battery pack comprises a plurality of modules, each module comprising a set of cells, the electrical power distribution system comprising:
a plurality of DC-DC converters,
wherein outputs of the plurality of DC-DC converters are coupled in series between a first output node and a second output node of the electrical power distribution system, such that an output voltage of the electrical power distribution system is equal to a sum of output voltages of the DC-DC converters, and
wherein, in use of the electrical power distribution system:
each of the plurality of DC-DC converters is coupled to a respective one of the plurality of modules to receive a DC input voltage of a first magnitude from the respective one of the plurality of modules; and
each of the plurality of DC-DC converters is operative to generate, based on the received DC input voltage, an output voltage of a second magnitude; and
the first output node is coupled to a first input terminal of the DC link and the second output node is coupled to a second input terminal of the DC link.

2. The electrical power distribution system of claim 1, further comprising:
a plurality of module management units, MMUs,
wherein, in use of the electrical power distribution system, each of the plurality of MMUs is coupled to a respective one of the plurality of modules,
and wherein each of the plurality of MMUs is configured to monitor an electrical parameter of the respective one of the plurality of modules.

3. The electrical power distribution system of claim 2, wherein the electrical parameter comprises one or more of:
a state of charge of a cell of the respective one of the plurality of modules;
an internal resistance of a cell of the respective one of the plurality of modules;
a temperature of a cell of the respective one of the plurality of modules;
a current of a cell of the respective one of the plurality of modules;
a voltage of a cell of the respective one of the plurality of modules; and
a state of health of a cell of the respective one of the plurality of modules.

4. The electrical power distribution system of claim 2 or claim 3, wherein each of the plurality of MMUs is further configured to perform cell balancing on cells of the respective one of the plurality of modules.

5. The electrical power distribution system of any of the preceding claims, wherein each of the plurality of MMUs is integrated with a respective one of the plurality of DC-DC converters.

6. The electrical power distribution system of any of the preceding claims, further comprising:
a battery management system, BMS, configured to control each of the plurality of DC-DC converters individually, so as to achieve a predefined output voltage and/or output current at the DC link.

7. A transport refrigeration unit, TRU, comprising an electrical power distribution system according to any of the preceding claims.

8. A transport unit comprising an electrical power distribution system according to any of claims 1 - 7.

9. A vehicle comprising an electrical power distribution system according to any of claims 1 -7.

10. A battery pack for supplying DC electrical power, the battery pack comprising:
a plurality of modules, each module comprising a set of cells,
wherein each of the plurality of modules is provided with a DC-DC converter configured to convert a DC voltage of a first magnitude output by the module to a DC output voltage of a second magnitude, and
wherein outputs of the plurality of DC-DC converters are coupled in series, such that a total DC output voltage of the DC-DC converters is equal to the sum of the output voltages of the DC-DC converters.

11. A combined DC-DC converter and module management system unit comprising:
a DC-DC converter configured to be coupled to a module of a battery pack; and
a module management system, MMS, configured to:
monitor one or more electrical parameters of cells of a module of a battery pack to which the combined DC-DC converter and module management system unit is coupled, in use; and
perform cell balancing on the cells of the module.
